# EUROPÄISCHE PATENTANMELDUNG

(11) **EP 2 559 927 A1**
(43) Veröffentlichungstag der Anmeldung: **20.02.2013**
(21) Anmeldenummer: 12177009.3
(22) Anmeldetag: 19.07.2012
(51) Int. Cl.: F16K 17/04

(54) **Passives Druckabbauventil und Kupplungsaktuatoranordnung für ein Kraftfahrzeuggetriebe**

(30) Priorität: 17.08.2011 DE 102011111160
(71) Anmelder: GETRAG Getriebe- und Zahnradfabrik Hermann Hagenmeyer GmbH & Cie KG, 74199 Untergruppenbach (DE)
(72) Erfinder: Potulski, Jan, 50733 Köln (DE); Nett, Hans-Peter, 53518 Adenau (DE)
(74) Vertreter: Witte, Weller & Partner

(57) **Zusammenfassung**

Es wird vorgeschlagen ein Druckabbauventil (10) für eine hydraulisch betätigte Kupplungsaktuatoranordnung eines Kraftfahrzeuggetriebes, wobei die Kupplungsaktuatoranordnung (100) einen Kupplungsaktuator (102) und eine mittels eines Motors (106) aktiv angetriebene Pumpe (104) aufweist, die durch einen Druckaufbau unmittelbar, ohne ein zwischengeschaltetes aktives Regelventil, auf den Kupplungsaktuator (102) zum Schließen einer Reibkupplung einwirkt, wobei das passive Druckabbauventil (10) an die Pumpe (104), den Kupplungsaktuator (102) und ein Reservoir (110) für ein Hydraulikfluid koppelbar ist, und wobei das Druckabbauventil (10) aufweist: ein Gehäuse (12); und einen Schieber (16); wobei der Schieber (16) einen rohrförmigen zylindrischen Schieberkörper (18) aufweist, der in Längsrichtung (20) eine erste Öffnung (50) mit einer ersten Durchflussfläche (54) und eine zweite Öffnung (52) mit einer zweiten Durchflussfläche (56) aufweist, wobei die erste Öffnung (50) und die zweite Öffnung (52) über einen Strömungskanal (48) innerhalb des Schieberkörpers (18) miteinander verbunden sind, wobei der Strömungskanal (48) zwischen der ersten Öffnung (50) und der zweiten Öffnung (52) einen Verjüngungsabschnitt (58) aufweist, der eine kleinere Durchflussfläche (64) als die erste Öffnung (50) und als die zweite Öffnung (52) aufweist; und wobei das Gehäuse (12) aufweist: einen Einlassanschluss (34) zur fluidischen Kopplung des Druckabbauventils (10) an die Pumpe (104); einen Auslassanschluss (36) zur fluidischen Kopplung des Druckabbauventils (10) an den Kupplungsaktuator (102); einen, vorzugsweise rohrförmigen, Gehäusekörper (14), der einen sich in Längsrichtung (20) des Gehäuses (12) erstreckenden Durchgangskanal (24) für das Hydraulikfluid aufweist, wobei der Durchgangskanal (24) ein erstes Ende (26), einen zylindrischen Ablassabschnitt (30) und ein gegenüberliegendes zweites Ende (28) aufweist, wobei der Einlassanschluss (34) das erste Ende (26) definiert, wobei der Auslassanschluss (36) das zweite Ende (28) definiert, wobei der Ablassabschnitt (30) zwischen dem ersten Ende (26) und dem zweiten Ende (28) des Durchgangskanals (24) angeordnet ist und den Schieber (16) derart passgenau aufnimmt, dass der Schieber (16) innerhalb des Auslassabschnitts (30) zwischen einer ersten Endstellung (44) und einer zweiten Endstellung (46) verschieblich (42) gelagert ist; und mindestens einen Ablassanschluss (32) zur fluidischen Kopplung des Druckabbauventils (10) an das Hydraulikfluidreservoir (110), wobei der Ablassanschluss (32) über einen Verbindungskanal (33) fluidisch an den Ablassabschnitt (30) gekoppelt ist, wobei der Verbindungskanal (33) in der ersten Endstellung (44) des Schiebers (16) verschlossen und in der zweiten Endstellung (46) des Schiebers (16) offen ist. (Fig. 1B)

## Beschreibung

Die vorliegende Erfindung betrifft ein passives Druckabbauventil für eine (elektro-) hydraulisch betätigte Kupplungsaktuatoranordnung eines Kraftfahrzeuggetriebes, wobei die Kupplungsaktuatoranordnung einen Kupplungsaktuator und eine mittels eines Motors angetriebene Pumpe aufweist, die durch einen Druckaufbau unmittelbar, ohne ein zwischengeschaltetes aktives Regelventil, auf den Kupplungsaktuator zum Schließen einer Reibkupplung einwirkt.

Das Öffnen einer hydraulisch angesteuerten Getriebekupplung (Reibkupplung) muss in Notsituationen, wie zum Beispiel bei einem Zusammenbruch des Fahrzeugsteuerungssystems oder einem Ausfall der Stromversorgung, sehr schnell erfolgen können, damit keine Verspannungszustände im Getriebe (zum Beispiel zwei Gänge gleichzeitig geschaltet) auftreten können.

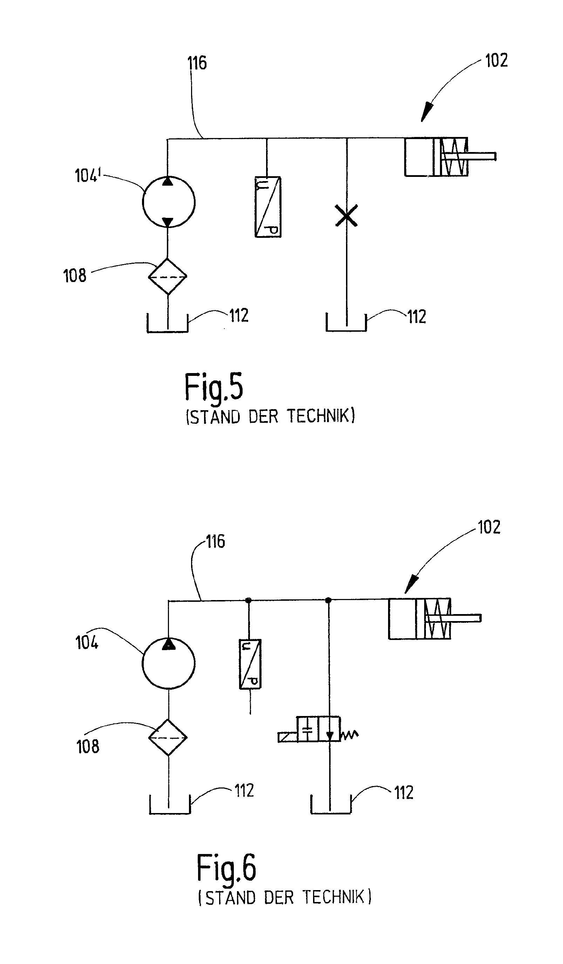

Im Hause der Anmelderin wurde bereits eine Pumpenaktuatorik entwickelt, bei der ein definierter Hydraulikfluid-Leckstrom über eine Blende kontinuierlich in einen Tank entleert wird. Eine Durchflusscharakteristik der Blende ist aber vorzugsweise für warmes Hydraulikfluid (zum Beispiel Öl) und hohe Pumpendrehzahlen ausgelegt, so dass im kalten Zustand des Hydraulikfluids und bei niedrigen Drehzahlen der Pumpe ein Sicherheitsproblem beim Ausfall der Pumpenenergie besteht. Eine derartige Kupplungsaktuatoranordnung ist in Fig. 5 gezeigt. Bei dieser direkt gesteuerten Pumpe macht man sich eine Abhängigkeit des Hydraulikfluiddrucks vom Pumpen-Antriebsmoment und einer Pumpendrehzahl zunutze. Die Druckregelung erfolgt hier also nicht über zusätzliche Regelglieder, wie zum Beispiel aktive geregelte Ventile, sondern direkt über die Ansteuerung des Motors der Pumpe.

Zur Entlüftung des Systems sowie für eine bessere Regelbarkeit des Systems bietet sich die Verwendung einer hydraulischen Blende an, wie sie exemplarisch in der DE 20 2006 017 096 U1 gezeigt ist.

Um gestiegenen Kundenansprüchen (zum Beispiel von Automobilherstellern) hinsichtlich der Fahrdynamik und Fahrsicherheit Rechnung zu tragen, setzen sich mehr und mehr aktive Sperrsysteme im Bereich des Antriebsstrangs durch. Die hohe Leistungsdichte der Hydraulik prädestiniert die Hydraulik für den Einsatz in Sperrkupplungen, da auf engstem Raum Axialkräfte von bis zu 40 kN gestellt werden können. Gepaart mit einem elektrischen Pumpenantrieb (on demand) ergeben sich so hocheffiziente Systeme mit hoher Leistungsdichte. Neben schnellen Zustellzeiten stellt das Öffnen im Fehlerfall eine der Hauptanforderungen im Zusammenspiel mit anderen Fahrdynamikregelsystemen (wie zum Beispiel ABS, ESP, etc.) dar. Ein sicheres und schnelles Öffnen der Sperrkupplung unter allen Bedingungen ist ein entscheidendes Merkmal für die Akzeptanz der Kunden.

Bereits seit einigen Jahren werden im Hause der Anmelderin, aber auch beim Wettbewerber, Systeme entwickelt, welche sich zur Kupplungsaktuierung einer Kombination aus Elektromotor und direkt angetriebener, hydraulischer Pumpe bedienen (vgl. zum Beispiel WO 2006/005516 A1).

Eine Möglichkeit, eine Druckabbauzeit im Fehlerfall zu verbessern, stellt ein so genanntes "Cut-Off"-Ventil dar (vgl. auch Fig. 6). Dabei handelt es sich in der Regel um ein elektrisch angesteuertes Ventil, welches stromlos einen Pfad zu einem Hydraulikfluidreservoir freigibt und so einen schnellen Druckabbau ermöglicht. Ein derartiges System ist in der EP 1 236 918 B1 gezeigt. Aufgrund der elektrischen Ansteuerung sind derartige Systeme mit einem hohen Integrations- und Kostenaufwand verbunden.

Aus der DE 37 36 584 ist eine hydraulische Kupplungsbetätigung für das Trennen einer Reibungskupplung in einem Antriebsstrang eines Kraftfahrzeuges bekannt. Zur Vermeidung von extremen Einkuppelgeschwindigkeiten und damit verbundenen Drehmomentspitzen in dem Antriebsstrang ist in einer Hydraulikleitung zwischen einem Geberzylinder und einem Nehmerzylinder eine Ventileinheit vorgesehen, die die Rückflussgeschwindigkeit der Hydraulikflüssigkeit vom Nehmerzylinder zum Geberzylinder herabsetzt.

Im Lichte der vorbekannten Systeme ist es eine Aufgabe der Erfindung, eine Möglichkeit zur Druckentlastung der Kupplungsaktuatoranordnung zu schaffen, auch in Notsituationen, welche möglichst ohne zusätzliche Hilfsenergie (zum Beispiel ohne elektrische Versorgung) auskommt.

Diese Aufgabe wird durch ein Druckabbauventil für eine hydraulisch betätigte Kupplungsaktuatoranordnung eines Kraftfahrzeuggetriebes gelöst, wobei die Kupplungsaktuatoranordnung einen Kupplungsaktuator und eine mittels eines Motors angetriebene Pumpe aufweist, die durch einen Druckaufbau unmittelbar, ohne ein zwischengeschaltetes aktives Regelventil, auf den Kupplungsaktuator zum Schließen einer Reibkupplung einwirkt, wobei das passive Druckabbauventil an die Pumpe, den Kupplungsaktuator und ein Reservoir für ein Hydraulikfluid koppelbar ist, und wobei das Druckabbauventil aufweist: ein Gehäuse; und einen Schieber; wobei der Schieber einen rohrförmigen, vorzugsweise zylindrischen, Schieberkörper aufweist, der in Längsrichtung eine erste Öffnung mit einer ersten Durchflussfläche und eine zweite Öffnung mit einer zweiten Durchflussfläche aufweist, wobei die erste Öffnung und die zweite Öffnung über einen Strömungskanal innerhalb des Schieberkörpers miteinander verbunden sind, wobei der Strömungskanal zwischen der ersten Öffnung und der zweiten Öffnung einen Verjüngungsabschnitt aufweist, der eine kleinere Durchflussfläche als die erste Öffnung und als die zweite Öffnung aufweist; und wobei das Gehäuse aufweist: einen Einlassanschluss zur fluidischen Kopplung des Druckabbauventils an die Pumpe; einen Auslassanschluss zur fluidischen Kopplung des Druckabbauventils an den Kupplungsaktuator; einen, vorzugsweise rohrförmigen, Gehäusekörper, der einen sich in Längsrichtung des Gehäuses erstreckenden Durchgangskanal für das Hydraulikfluid aufweist, wobei der Durchgangskanal ein erstes Ende, einen zylindrischen Ablassabschnitt und ein gegenüberliegendes zweites Ende aufweist, wobei der Einlassanschluss das erste Ende definiert, wobei der Auslassanschluss das zweite Ende definiert, wobei der Ablassabschnitt zwischen dem ersten Ende und dem zweiten Ende des Durchgangskanals angeordnet ist und den Schieber derart passgenau aufnimmt, dass der Schieber innerhalb des Auslassabschnitts zwischen einer ersten Endstellung und einer zweiten Endstellung verschieblich gelagert ist; und einen Ablassanschluss zur fluidischen Kopplung des Druckabbauventils an das Hydraulikfluidreservoir, wobei der Ablassanschluss über einen Verbindungskanal fluidisch an den Ablassabschnitt gekoppelt ist, wobei der Verbindungskanal in der ersten Endstellung des Schiebers verschlossen und in der zweiten Endstellung des Schiebers offen ist.

Die Erfindung macht sich unter anderem eine in der Strömung des Hydraulikfluids enthaltene Energie zunutze. Das Ventil besitzt einen röhrenförmigen Ventilschieber mit einer Verengung im Inneren in einer radialen Richtung. Das Ventil ist an eine Pumpe, einen Kupplungsaktuator und ein Hydraulikfluidreservoir koppelbar. Im Normalfall fließt das Hydraulikfluid von der Pumpe zum Kupplungsaktuator als Volumenstrom. Der Schieber bewegt sich dann in Richtung des Kupplungsaktuators, da ein (Stau-) Druck vor der Verjüngung im Schieber größer als hinter der Verjüngung ist. Dadurch wird ein Ablassanschluss verschlossen. Fällt nun die Pumpe aus, wird zuerst der Druck auf beiden Seiten der Verjüngung gleich groß. Dann wird der üblicherweise federbelastete Kolben des Kupplungsaktuators zurückgedrückt, so dass das Hydraulikfluid zurück in Richtung der Pumpe gedrückt wird. Dadurch wird der Schieber zurückbewegt, da sich auf der Seite des Kupplungsaktuators mit dem Zustandekommen des rücklaufenden Hydraulikfluids ein höherer Druck als auf der Pumpenseite aufbaut. In diesem Fall öffnet sich der Ablassanschluss, und es kann zu einem sofortigen Abbau einer Druckspitze durch ungehindertes Abfließen des Hydraulikfluids in den Tank kommen. Dabei ist es von Vorteil, wenn die Pumpe und/oder der Ablassanschluss eine (kleine) innere Leckage besitzen, die im Notfall ein langsames Zurücklaufen des Öls in das Hydraulikfluidreservoir ermöglicht.

Das Ventil ist einfach aufgebaut. Ein Spiel zwischen dem Schieber und dessen Führung im Ventilgehäuse kann relativ groß bemessen werden, da selbst eine hundertprozentige Dichtheit des Ablassanschlusses relativ zum Schieber nicht unbedingt erforderlich ist. Damit kann auf Reinraumbedingungen bei der Herstellung verzichtet werden. Im Fahrzeugbetrieb kann auf eine zusätzliche Ölfilterung verzichtet werden. Ölwechsel sind weniger oft erforderlich.

Dies bedeutet mit anderen Worten, dass das Ventil der Erfindung ein schnelles Öffnen einer Sperrkupplung unter allen Bedingungen ermöglicht, ohne zusätzliche Hilfsenergie (zum Beispiel für eine elektrische Ansteuerung) zu benötigen. Deshalb wird das Ventil als "passiv" bezeichnet. Das Ventil der Erfindung steht auch im Einklang mit der Forderung, eine gute Effizienz des Systems für einen Druckaufbau bereitzustellen, wobei üblicherweise eine Minimierung der auftretenden Leckagen gefordert wird. Der Druckabbau ist bei direkt angetriebenen Pumpen hauptsächlich von der Dynamik und den Schlepp- bzw. Rastmomenten der Pumpe und des Motors abhängig. Das Ventil der Erfindung ermöglicht ein schnelles Öffnen der Sperrkupplung, wobei auf eine kostenintensive elektrische Ansteuerung verzichtet wird. Das Ventil selbst ist aus wenigen, vergleichsweise einfachen Komponenten aufgebaut und dadurch kostengünstig herzustellen.

Bei einer bevorzugten Ausführungsform schließt sich mindestens ein Verbindungskanal quer zur Längsrichtung an den Durchgangskanal an.

Der Gehäusekörper ist insbesondere zylindrisch, quadratisch oder rechteckig ausgebildet.

Der Zylinder erstreckt sich dabei in axialer Richtung, so dass der Schieber im Wesentlichen in der axialen Richtung bewegt wird. Wenn sich der Verbindungskanal des Ablassanschlusses dann quer zur Längsrichtung des Zylinders erstreckt, ist das Öffnen und Schließen des Verbindungskanals einfach durch die Bewegung des Schiebers in axialer Richtung einstellbar.

Weiter ist es von Vorteil, wenn der Durchgangskanal zylindrisch ausgebildet ist, wobei der Ablassabschnitt in der Längsrichtung durch Sprengringe begrenzt ist.

Wenn der Durchgangskanal zylindrisch ausgebildet ist, kann der Gehäusekörper einfach auf spanende Weise aus einem vollen Rundmaterial hergestellt werden. Eine Länge des Ablassabschnitts kann durch Positionieren der Sprengringe frei und ohne Probleme eingestellt werden. Die Sprengringe können nachträglich eingebaut und verstellt werden.

Bei einer weiteren bevorzugten Ausführungsform weist der Strömungskanal eine Blende mit einer Öffnung in einer axialen Richtung des Schiebers auf.

Ähnlich wie der Gehäusekörper kann auch der Schieberkörper rohrförmig ausgebildet sein. Die Blende kann nachträglich in dem Schieber installiert werden.

Weiter ist es bevorzugt, wenn ein Außendurchmesser des Schiebers inklusive einem Passungsspiel im Wesentlichen einem Innendurchmesser des Ablassabschnittes entspricht.

Der Schieber sitzt dann passgenau im Durchgangskanal im Bereich des Ablassabschnittes. Über das (radiale) Spiel zwischen dem Schieber und einer Innenwandung des Durchgangskanals kann eine (kleine) Leckage erzeugt werden, die im Notfall einen initialen Druckabbau über den Ablassanschluss bewirkt.

Außerdem ist es von Vorteil, wenn ferner ein Federelement vorgesehen ist, das den Schieber in die erste Endstellung oder in die zweite Endstellung vorspannt.

Das Federelement kann genutzt werden, um aus Gründen einer einfacheren Ansteuerung eine gewünschte, definierte Hysterese vorzusehen, da der Zustelldruck für den Kupplungsaktuator direkt von der Pumpe erzeugt wird.

Bei einer besonderen Ausgestaltung entspricht ein Innendurchmesser des Schiebers einem Durchmesser des Einlassanschlusses und/oder des Auslassanschlusses.

Bei dieser Wahl des Durchmessers stellt sich im Durchgangskanal im Wesentlichen eine laminare Strömung ein. Lediglich im Bereich der Verjüngung im Strömungskanal des Schiebers kommt es zu einer flaschenhalsartigen Verengung, die die Strömung im Schieber verändert und dadurch die unterschiedlichen Drücke in den Bereichen des Einlassanschlusses und des Auslassanschlusses hervorruft.

Weiter ist es bevorzugt, wenn das Ventil angepasst ist, den Schieber allein durch Druckänderungen zwischen dem Einlassanschluss und dem Auslassanschluss zwischen der ersten und der zweiten Endstellung hin- und herzubewegen.

Durch die Hin-und-her-Bewegung des Schiebers wird der Verbindungskanal, der den Ablassanschluss an den Strömungskanal des Gehäusekörpers anschließt, geöffnet und geschlossen. Insbesondere im Notfall öffnet sich der Ablassanschluss selbsttätig und stellt so sicher, dass das Hydraulikfluid sehr schnell ohne zusätzliche Hilfsenergie abfließen kann. Der Druck im Kupplungsaktuator baut sich blitzartig ab.

Gemäß einem weiteren Aspekt der Erfindung wird eine Kupplungsaktuatoranordnung mit einem hydraulisch betriebenen Kupplungsaktuator, einer motorisch betriebenen Pumpe, einem Reservoir für ein Hydraulikfluid, Leitungen und einem passiven Druckabbauventil gemäß der Erfindung vorgeschlagen, wobei die Pumpe, das passive Druckabbauventil, das Reservoir und der Kupplungsaktuator über die Leitungen hydraulisch miteinander verbunden sind.

Ferner ist es bevorzugt, wenn der Ablassabschnitt eine größere Durchflussfläche als die erste Öffnung und als die zweite Öffnung sowie eine dritte Öffnung aufweist.

Dies beschleunigt den Druckabbau.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1A: eine Schnittansicht eines ersten Ventils gemäß der Erfindung in einer 3-Wege-Stellung;
- Fig. 1B: das Ventil der Fig. 1A in einer 2-Wege-Stellung;
- Fig. 2: ein abgewandeltes Ventil gemäß der Erfindung;
- Fig. 3: eine weitere Abwandlung eines erfindungsgemäßen Ventils;
- Fig. 4: ein Blockdiagramm eines Hydraulikkreislaufs mit einer Kupplungsaktuatoranordnung gemäß der Erfindung;
- Fig. 5: eine Kupplungsaktuatoranordnung gemäß dem Stand der Technik; und
- Fig. 6: eine weitere Kupplungsaktuatoranordnung gemäß dem Stand der Technik.

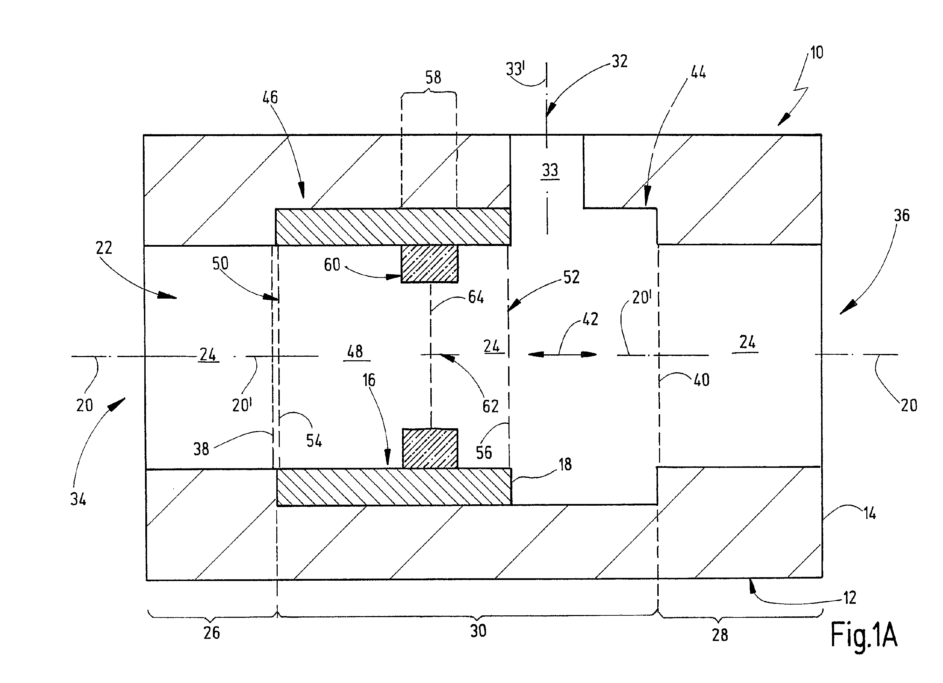

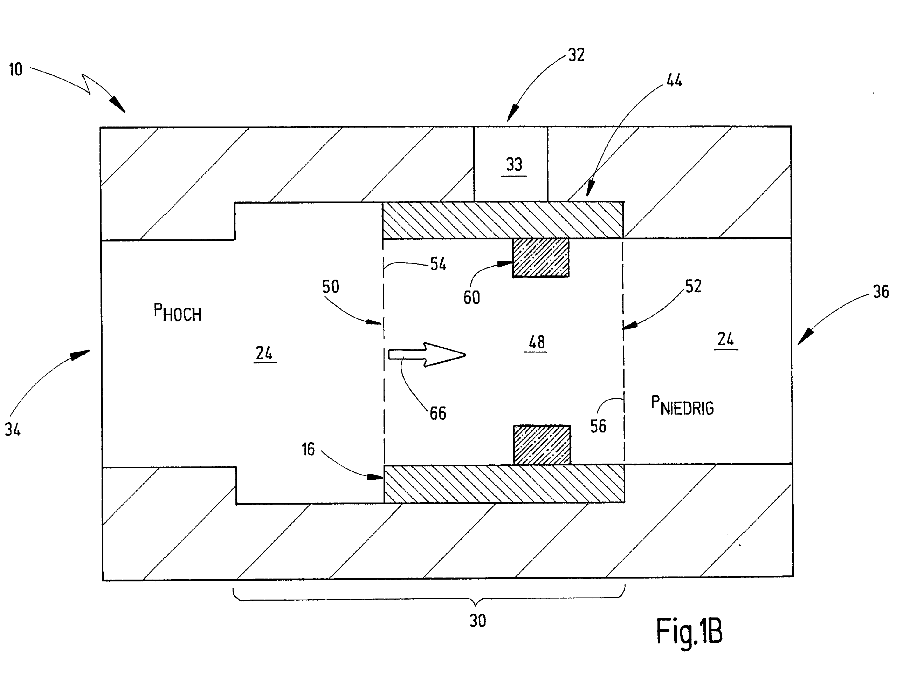

Die Fig. 1A zeigt ein "passives" (Druckabbau-) Ventil 10 (nachfolgend auch kurz "Ventil" genannt) in einer Endstellung, und Fig. 1B zeigt das Ventil 10 der Fig. 1A in einer anderen Endstellung. Die Fig. 1A und 1B stellen jeweils Schnittansichten des Ventils 10 dar, wobei im Nachfolgenden auf beide Figuren 1A und 1B gemeinsam Bezug genommen werden wird.

Das Ventil 10 weist ein Gehäuse 12 mit einem Gehäusekörper 14 und einen Schieber 16 mit einem Schieberkörper 18 auf. Das Gehäuse 12 erstreckt sich entlang einer Längsrichtung 20. Der Schieber 16 erstreckt sich entlang einer Längsrichtung 20'. Die Längsrichtungen 20 und 20' sind zumindest entlang eines Ablassabschnitts 30 des Gehäuses 12 koaxial, wie es nachfolgend noch näher erläutert werden wird.

Das Gehäuse 12 weist in der Längsrichtung 20 einen inneren durchgängigen Hohlraum 22 auf, der sich im Wesentlichen entlang der Längsrichtung 20 erstreckt und der einen Durchgangskanal 24 mit einem ersten (offenen) Ende 26 und einem zweiten (offenen) Ende 28 aufweist. Der Ablassabschnitt 30 des Durchgangskanals 24 erstreckt sich zwischen den Enden 26 und 28. Bei dem Ventil 10 der Fig. 1A und 1B handelt es sich bei den Enden 26 und 28 hier um Endabschnitte, die sich entlang der Längsrichtung 20 erstrecken.

Der Ablassabschnitt 30 weist einen Ablassanschluss 32 und einen Verbindungskanal 33 auf, der sich entlang seiner Längsrichtung 33' erstreckt. Die Längsrichtung 33' ist quer zur Längsrichtung 20' des Durchgangskanals 24 orientiert. Der Verbindungskanal 33 schließt quer an den Durchgangskanal 24 an. Der Ablassanschluss 32 stellt eine Öffnung im Gehäusekörper 14 dar, die üblicherweise radial orientiert ist, wenn die Längsrichtung 20 eine Axialrichtung definiert.

Der Ablassanschluss 32 kann eine oder mehrere Öffnungen innerhalb des Gehäusekörpers 14 aufweisen. Die Öffnungen sind vorzugsweise am Umfang verteilt angeordnet. Sie können radial nach außen weisen. Am Außenmantel des Gehäuses 14 können diese Öffnungen in einer nicht gezeigten Vorrichtung zusammengefasst werden.

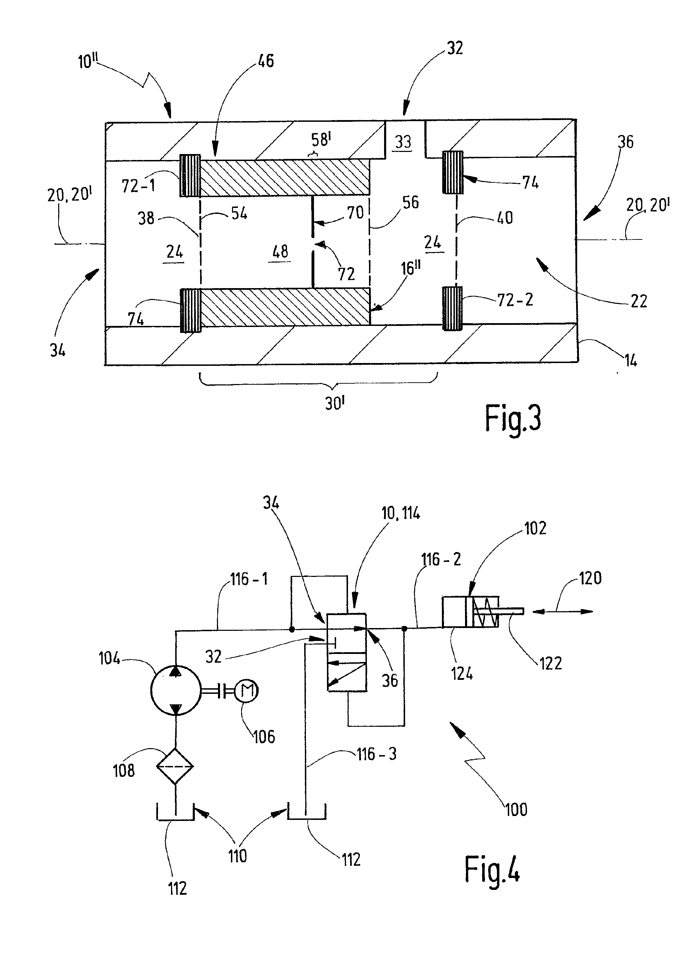

Neben dem Ablassanschluss 32 weist das Gehäuse 12 mindestens zwei weitere Anschlüsse auf, nämlich einen Einlassanschluss 34 und einen Auslassanschluss 36. Der Einlassanschluss 34 stellt eine Öffnung in einer Stirnseite des Gehäuses 12 dar. Der Auslassanschluss 36 stellt eine weitere Öffnung in einer gegenüberliegenden Stirnseite des Gehäuses 12 dar. Die Anschlüsse 34 und 36 liegen sich relativ zur Längsrichtung 20 gegenüber. Die Anschlüsse 34 und 36 stellen die Öffnungen des Durchgangskanals 24 zu den weiteren Hydraulikkomponenten des Aktuatorsystems dar. Der Einlassanschluss 34 wird üblicherweise an eine Pumpe 104 gekoppelt, wie es nachfolgend noch erläutert werden wird. Der Auslassanschluss 36 wird üblicherweise an einen Kupplungsaktuator 102 gekoppelt, wie es nachfolgend unter Bezugnahme auf Fig. 4 noch näher erläutert werden wird. Der Ablassanschluss 32 ist üblicherweise an ein (Hydraulikfluid-) Reservoir 110 gekoppelt, wie es ebenfalls unter Bezugnahme auf Fig. 4 noch näher erläutert werden wird.

Der Einlassanschluss 34 definiert eine Durchlassfläche 38, die in der Fig. 1A mittels einer Strichlinie dargestellt ist. Der Auslassanschluss 36 definiert eine Durchlassfläche 40, die in der Fig. 1A ebenfalls durch eine Strichlinie dargestellt ist. Aufgrund einer zylindersymmetrischen Ausgestaltung des Gehäuses 12 sind die Durchlassflächen 38 und 40 der Fig. 1 gleich groß. Die Durchlassflächen 38 und 40 sind vorzugsweise senkrecht zur Längsrichtung 20 orientiert und sind vorzugsweise an Übergangsflächen zwischen den Anschlüssen 34, 36 und dem Ablassabschnitt 30 angeordnet, sofern der Ablassabschnitt 30 vom Einlassanschluss 34 zum Auslassanschluss 36 reicht. Es versteht sich, dass zwischen den Anschlüssen 34 und 36 und dem Ablassabschnitt 30 weitere Abschnitte des Durchgangskanals 24 angeordnet sein können, beispielsweise ein oder mehrere bogenförmige Abschnitte. Das Gehäuse 12 der Fig. 1 erstreckt sich entlang der Längsrichtung 20, die exemplarisch geradlinig orientiert ist. Es versteht sich, dass die Längsachse 20 eine beliebig geformte Kurve sein kann, solange zumindest der Ablassabschnitt 30 gerade orientiert ist.

Der Schieber 16 ist derart genau an den Durchgangskanal 24 angepasst, dass er aufgrund einer Hydraulikfluidströmung im Ablassabschnitt 30 hin und her bewegt werden kann, wie es in der Fig. 1A durch einen Doppelpfeil 42 angedeutet ist. In Abhängigkeit davon, wie die Hydraulikfluidströmung orientiert ist, baut sich entweder im Bereich des Einlassanschlusses 34 oder im Bereich des Auslassanschlusses 36 ein Hochdruckbereich auf, der den Schieber 16 in Richtung des gegenüberliegenden Anschlusses 36 bzw. 34 schiebt, wie es nachfolgend noch erläutert werden wird.

In der Fig. 1 ist eine erste Endstellung (Fig. 1B) und eine zweite Endstellung (Fig. 1A) des Schiebers 16 im Ablassabschnitt 30 des Durchgangskanals 24 gezeigt. In der ersten Endstellung 44 (Fig. 1B) verschließt der Schieber 16 den Verbindungskanal 33, vorzugsweise annähernd dicht, so dass das Hydraulikfluid nur im Inneren entlang der Längsrichtung 20 fließen kann. In der zweiten Endstellung 46 (Fig. 1A) ist der Verbindungskanal 33 offen, so dass das Hydraulikfluid alternativ auch entlang der Längsrichtung 33' des Verbindungskanals 33 aus dem Ablassanschluss 32 fließen kann.

Der Schieber 16 definiert in seinem Inneren in Längsrichtung 20' einen Strömungskanal 48. Der Strömungskanal 48 ist zwischen einer ersten Öffnung 50 und einer zweiten Öffnung 52 angeordnet und erstreckt sich axial in der Längsrichtung 20. Die erste Öffnung 50 definiert eine Durchflussfläche 54. Die zweite Öffnung 52 definiert eine Durchflussfläche 56. Zwischen der ersten Öffnung 50 und der zweiten Öffnung 52 ist ein sich in axialer Richtung erstreckender Verjüngungsabschnitt 58 angeordnet. Im Verjüngungsabschnitt 58 des Strömungskanals 48 verringert sich eine Durchflussfläche im Vergleich zu den Durchflussflächen 54 und 56. Der Verjüngungsabschnitt 58 stellt somit eine Engstelle für eine Hydraulikfluidströmung in der Längsrichtung dar. Der Schieber 16 der Fig. 1 weist exemplarisch im Bereich des Verjüngungsabschnitts 58 eine Blende 60 in Form eines Rings mit einer zentralen Öffnung 62 auf. Die Öffnung 62 definiert eine (konstante) Durchflussfläche 64, die kleiner als die Durchflussflächen 54 und 56 ist.

Fig. 1A zeigt das Ventil 10 im Startzustand. Im Startzustand ist das Ventil 10 nicht mit Druck beaufschlagt. Sobald über den Einlassanschluss 34 Hydraulikfluid in den Durchgangskanal 24 gepumpt wird, steigt der Druck im Bereich des Einlassanschlusses 34 an, was in Fig. 1B durch "P_{HOCH}" angedeutet ist. Gleichzeitig beginnt das Hydraulikfluid in Richtung des Auslassanschlusses 36 zu strömen, wie es in Fig. 1B durch einen Pfeil 66 angedeutet ist. Da sich der Strömungskanal 48 im Verjüngungsabschnitt 58 in der radialen Richtung verjüngt, baut sich zwischen dem ersten Ende 26 und dem links von der Blende 60 gelegenen Bereich des Strömungskanals 48 der (Stau-) Druck P_{HOCH} auf. Die Tatsache, dass der Verbindungskanal 33 im Zustand der Fig. 1A offen ist, ist unbeachtlich, da sich der Hochdruckbereich P_{HOCH} auf jeden Fall links von der Blende 60 ausbilden wird. Entscheidend ist allein die flaschenhalsartige Verjüngung im Verjüngungsabschnitt 58 des Schiebers 16. Der höhere Druck P_{HOCH} im Bereich des Einlassanschlusses 34 schiebt den Schieber 16 in Richtung des Auslassanschlusses 36, so dass der Verbindungskanal 33 geschlossen wird, wie es in der Fig. 1B gezeigt ist. Diese Bewegung kann durch einen Venturi-Effekt im (Schatten-) Bereich der Blende 60 verstärkt werden. Der Venturi-Effekt tritt ein, wenn der Verjüngungsabschnitt 58 düsenförmig ausgebildet ist. Dann stellt sich im Schattenbereich der Blende 60, das heißt also rechts von der Blende 60, an der Ausgangsöffnung der Blende 60 ein Sogeffekt ein, wenn das Hydraulikfluid vom Einlassanschluss 34 in Richtung des Auslassanschlusses 36 fließt.

Ein Innendurchmesser des Ablassabschnittes 30 des Durchgangskanals 24 ist im Wesentlichen gleich groß wie ein Außendurchmesser des rohrförmigen, vorzugsweise zylindrischen, Schiebers 16. Zwischen einem äußeren Zylindermantel des Schiebers 16 und einer hier nicht näher bezeichneten Innenwandung des Ablassabschnittes 30 (der Verbindungskanal 33 wird bei dieser Betrachtung vernachlässigt), kann ein großzügig bemessenes Spiel vorhanden sein. Je größer das Spiel zwischen dem Schieber 16 und dem Gehäusekörper 14 im Bereich des Ablassabschnittes 30 in der radialen Richtung ist, desto größer wird eine Leckage durch den Verbindungskanal 33 sein, der wiederum mit dem Reservoir 110 in Verbindung steht. Dieses Spiel ermöglicht eine Herstellung des Gehäuses 12 und des Schiebers 16 unter Vernachlässigung von Passgenauigkeiten und aufwendiger Oberflächenbearbeitung der aneinander gleitenden Flächen. Des Weiteren kann eine Leckage auch aus Gründen einer Ansteuerung (gewünschte definierte Hysterese) von Vorteil sein.

Strömungstechnisch ist es von Vorteil, wenn ein Innendurchmesser des Strömungskanals 48 mit einem Innendurchmesser der Anschlüsse 34 und 36 übereinstimmt (vgl. Durchlassflächen 38, 40, 50 und 52). In diesem Fall definieren das Gehäuse 12 und der Schieber 16 einen zylindrischen Kanal, in welchem sich über große Teile eine laminare Strömung ausbildet. Ein Zylinder ist im Sinne der vorliegenden Beschreibung von zwei, vorzugsweise parallelen, ebenen Flächen (Grund-und Deckfläche) und einer Mantel- bzw. Zylinderfläche begrenzt, die von parallelen Geraden gebildet wird. Dies bedeutet, dass ein idealer Zylinder durch eine Verschiebung einer ebenen Fläche (oder Kurve) entlang einer Geraden entsteht, die nicht in dieser Ebene liegt. Die Fig. 1 zeigt einen geraden Zylinder, weil die eben erwähnten Geraden senkrecht zur Grund- und Deckfläche orientiert sind. Vorzugsweise sind die Grund- und Deckflächen kreisförmig ausgebildet.

Der Schieber 16 wird so lange in der ersten Endstellung 44 (Fig. 1B) gehalten, wie im Bereich des Einlassanschlusses 34 ein Hochdruck im Vergleich zum Bereich des Auslassanschlusses 36 herrscht, wo dann ein Niederdruckbereich (vgl. "P_{NIEDRIG}") herrscht.

Fällt die Pumpe 104 aufgrund eines Fehlers oder eines Energieausfalls aus, nimmt der Druck im Bereich des Einlassanschlusses 34 ab. Ein Druckabfall kann durch eine Leckage durch den Verbindungskanal 33 begründet sein. Der Druckabfall ist in der Regel aber hauptsächlich durch eine Leckage im Bereich der Pumpe 104 begründet. Eine Leckage im Bereich des Auslassanschlusses 36 (bzw. im Kupplungsaktuator 102) ist aufgrund der hohen zu applizierenden Kräfte (bis zu 40 kN) nahezu ausgeschlossen, so dass der Hochdruckbereich P_{HOCH} und der Niederdruckbereich P_{NIEDRIG} ihre Positionen wechseln. Der Hochdruckbereich P_{HOCH} liegt dann auf der Seite des Auslassanschlusses 36, wohingegen der Niederdruckbereich P_{NIEDRIG} auf der Seite des Einlassanschlusses 34 liegt. Sobald sich derartige Druckverhältnisse im Ventil 10 einstellen, wird der Schieber 16 aus der ersten Endstellung 44 der Fig. 1b in die zweite Endstellung 46 (zurück-) geschoben, wie es in Fig. 1A gezeigt ist. Während der Schieber 16 in Richtung des Einlassanschlusses 34 verschoben wird, öffnet sich der Verbindungskanal 33, so dass sich ein Überdruck im Bereich des Auslassanschlusses 36 schlagartig über den Ablassanschluss 32 abbauen kann, der mit dem Reservoir 110 in Verbindung stehen kann.

Bemerkenswert an dieser Anordnung ist, dass der Druckabbau im Falle eines Fehlers oder eines Energieausfalls selbstständig stattfindet. Die Druckverhältnisse müssen nicht gemessen werden, um aktiv auf das Ventil 10 einzuwirken. Das Ventil 10 ist passiv. Das Ventil 10 benötigt keine externe Energie, um den Verbindungskanal 33 zum Ablassanschluss 32 schlagartig zu öffnen. Das Ventil 10 ist in diesem Sinne ein selbsttätig schaltendes 3-2-Wegeventil. Die zur Schaltung notwendige Energie bezieht das Ventil 10 aus dem strömenden Hydraulikfluid, insbesondere aus den unterschiedlichen Druckverhältnissen im Bereich der Anschlüsse 34 und 36. Auf eine zusätzliche (zum Beispiel elektrische) Ansteuerung kann vollkommen verzichtet werden. Eine Druckentlastung des Systems ist ohne zusätzliche Hilfsenergie (zum Beispiel elektrische Versorgung) möglich. Üblicherweise wird Öl als Hydraulikfluid verwendet. Selbst bei niedrigen Temperaturen unter 10 °C, bei denen das Öl kalt ist und eine hohe Viskosität aufweist, kann der Überdruck auf der Seite des Auslassventils schnell abgebaut werden. Im Notfall ist die Schaltzeit sehr gering, so dass der Schieber 16 schnell und sicher aus der ersten Endstellung (Fig. 1B) in eine Öffnungsstellung (zweite Endstellung) verbracht werden kann.

Des Weiteren können Entlüftungsblenden im Hydraulikkreislauf entfallen, da durch die Ventilfunktion des Ventils 10 ein Kolbenraum über zyklisches Betätigen des Kupplungsaktuators 102 entlüftet werden kann.

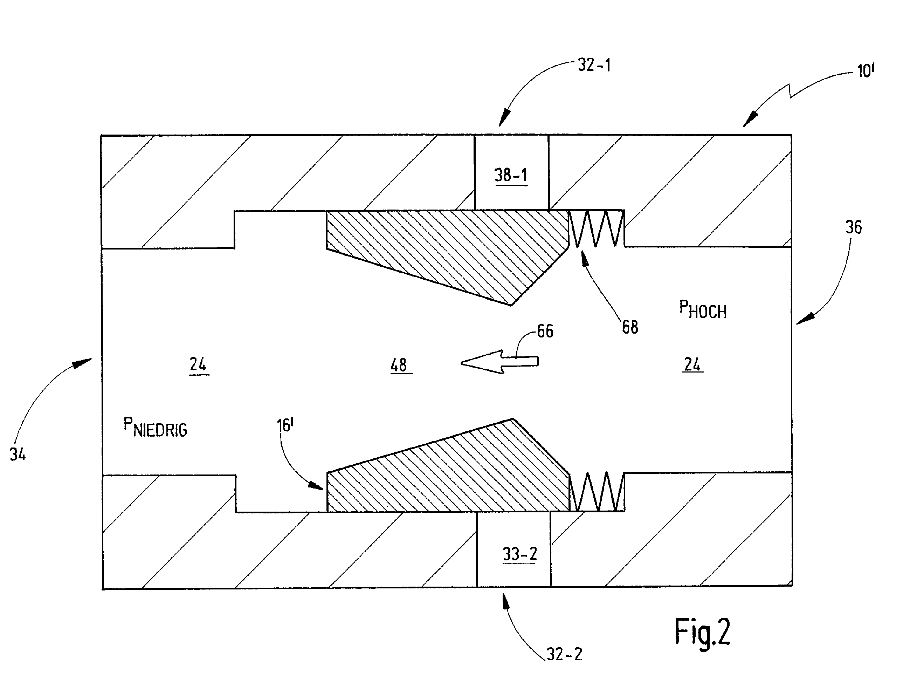

In Fig. 2 ist eine (seitliche) Schnittansicht eines abgewandelten Ventils 10' gezeigt. Das Ventil 10' der Fig. 2 unterscheidet sich von den Ventilen 10 der Fig. 1 in drei Punkten, nämlich der konkreten Ausgestaltung der Form des Schiebers, einem zusätzlich vorgesehenen Federelement 68 und der Anzahl von Verbindungskanälen 33. Mit Ausnahme des Inneren des Schiebers 16' können alle geometrischen Verhältnisse beibehalten werden. Der Schieber 16' ist in axialer Richtung genauso lang wie der Schieber 16 der Fig. 1. Der Schieber 16' ― und auch der Schieber 16 der Fig. 1 ― ist so lang, dass ein oder mehrere Verbindungskanäle 33-1 und 33-2 in der zweiten Endstellung 46 (vgl. Fig. 1B) sicher verschlossen sind. Ein Federelement 68 ist zwischen dem Schieber 16' und dem Auslassanschluss 36 (koaxial) angeordnet. Das Federelement 68 spannt den Schieber 16' in die erste Endstellung 46 (vgl. Fig. 1A) vor. Das Federelement 68 positioniert den Schieber 16' ohne hydraulische oder elektrische Energie sicher in der zweiten Endlage 46. Neben diesem Effekt bewirkt das Federelement 68 zusätzlich eine gewünschte definierte Hysterese zum Zwecke einer vereinfachten (hydraulischen) Ansteuerung.

In der Umfangsrichtung können ein oder mehrere durchgehende Verbindungskanäle 33 in radialer Richtung im Gehäusekörper 14 vorgesehen sein, um den Hohlraum 22 mit den weiteren Hydraulikkomponenten des Aktuatorsystems zu verbinden.

In Fig. 2 ist die Situation gezeigt, dass zum Beispiel die Pumpe 104 auf der Seite des Einlassanschlusses 34 ― wider Erwarten ― ausfällt. Durch die Leckagen über die Verbindungskanäle 33 und/oder die Pumpe 104 selbst fällt der Druck auf der Seite des Einlassanschlusses 34 gegenüber dem Druck im Bereich des Ablassanschlusses 36 ab. Im Bereich des Ablassanschlusses 36 bildet sich ein Hochdruckbereich P_{HOCH} aus, der den Schieber 16' aufgrund der inneren Verjüngung (in der radialen Richtung) in der Längsrichtung 20 bzw. 20' in Richtung des Einlassanschlusses 34 gedrückt wird.

Im Inneren des Schiebers 16' ist in der Längsrichtung 20' ein Hohlraum definiert, der exemplarisch zwei sich gegenüberliegende Kegelstümpfe repräsentiert. Die Kegelstümpfe weisen die gleiche sich gegenüberliegende Deckfläche auf.

Es versteht sich, dass das Federelement 68 auch auf der gegenüberliegenden Seite angeordnet werden kann, das heißt zwischen dem Einlassanschluss 34 und dem Schieber 16'.

In Fig. 3 ist ein weiteres Ventil 10" gemäß der Erfindung, das fertigungstechnisch besonders einfach herzustellen ist, in einer geschnittenen Seitenansicht gezeigt. Der Gehäusekörper 14 ist rohrförmig zylindrisch ausgebildet, das heißt der Gehäusekörper 14 ist sowohl außen als auch innen zylindrisch. Das Ventil 10" weist zum Beispiel nur einen Verbindungskanal 33 auf, um den Ablassanschluss 32 mit dem Durchgangskanal 24 zu verbinden. Die Fig. 3 zeigt den Schieber 16" in der Endstellung 46 gemäß der Fig. 1. In der Endstellung 46 ist der Verbindungskanal 33 offen. Der Schieber 16" ist in seinem Inneren mit einer Lochblende 70 ausgestattet, die eine Öffnung 72 aufweist. Die Öffnung 72 weist eine Durchflussfläche auf, die sehr viel kleiner als die Durchflussflächen 54 und 56 des Schiebers 16" ist. Der Ablassabschnitt 30' erstreckt sich in der Längsrichtung 20 zwischen einem ersten Anschlag 72-1 und einem zweiten Anschlag 72-2, die jeweils durch einen Sprengring 74 implementiert sein können. Es versteht sich, dass anstatt der Sprengringe 74 auch andere Anschlagsmittel wie Bohrsicherungsringe oder eingeschraubte Buchsen die Anschlagsfunktion ausführen können. Ein großer Vorteil des zylindrischen Gehäusekörpers 14 äußert sich in seiner Herstellung. Der Hohlraum 22 im Inneren des Gehäusekörpers 14 kann durch spanende Bearbeitung mit wenigen und einfachen Werkzeugen hergestellt werden. Die Sprengringe 74 weisen Durchflussflächen 38 und 40 auf, die den Durchflussflächen 54 und 56 vorzugsweise entsprechen. Die Sprengringe 74 stellen strömungstechnische Verengungen dar. Es versteht sich, dass die Durchflussflächen 38 und 40 nicht zwingend gleich groß sein müssen.

Bezug nehmend auf Fig. 4 ist ein Hydraulikschaltkreis für eine Kupplungsaktuatoranordnung 100 gemäß der Erfindung gezeigt.

Die Kupplungsaktuatoranordnung 100 weist einen Kupplungsaktuator 102, eine Pumpe 104, einen Motor 106, einen Filter 108 sowie ein Hydraulikfluidreservoir 110 in Form eines offenen Tanks 112 auf. Des Weiteren weist die Kupplungsaktuatoranordnung 100 ein 3-2-Wege-Ventil 114 auf, wie es exemplarisch in den Fig. 1 bis 3 in Form des Ventils 10, 10' und 10" gezeigt ist. Die eben genannten Elemente 102 bis 114 sind über (Hydraulik-) Leitungen 116-1 bis 116-3 miteinander verbunden.

Der Kolben des Kupplungsaktuators 102 ist in einer Richtung 120 hin und her bewegbar. Der Kupplungsaktuator 102 weist zum Beispiel einen Kolben 122 und einen Zylinder 124 auf. Der Zylinder 124 ist mit dem Auslassanschluss 36 des Ventils 10 verbunden. Der Einlassanschluss 34 ist mit der Pumpe 104 verbunden. Der Ablassanschluss 32 ist mit dem Reservoir 110 verbunden. Neben den Leitungen 116-1 bis 116-3 sind schaltungstechnische Verbindungen des Ventils 10 gezeigt. Das Ventil 10 ist in Fig. 4 in einer Stellung gezeigt, bei der der Kupplungsaktuator 102 mit Druck über die Pumpe 104 beaufschlagt ist. Das Hydraulikfluid fließt von der Pumpe 104 zum Kupplungsaktuator 102 und fährt so den Kolben 122 axial aus. In diesem Fall befindet sich die Hochdruckseite P_{HOCH} auf der Seite des Einlassanschlusses 34. Der Druck, um eine (nicht gezeigte) Reibkupplung eines Antriebsstrangs eines Kraftfahrzeugs zu schließen, wird direkt von der Pumpe 104 ohne Zwischenschaltung aktiver Regelventile erzeugt. Dazu wird der Volumenstrom der Pumpe 104 über den Motor 106 geregelt. Zum Öffnen der Reibkupplung kann die Pumpe 104 in umgekehrter Richtung angetrieben werden, so dass sich auf der Seite der Pumpe 104 der Niederdruckbereich P_{NIEDRIG} einstellt. In diesem Fall ist der Hochdruckbereich P_{HOCH} auf der Seite des Auslassanschlusses 36 angeordnet, so dass das Ventil 10 eine direkte Verbindung zwischen der Leitung 116-2 und der Leitung 116-3 herstellt.

Ein Öffnen des hydraulisch gesteuerten Kupplungsaktuators 102 muss in Notsituationen, wie zum Beispiel einem Zusammenbruch des Fahrzeugsteuerungssytems oder einem Ausfall der Stromversorgung für die Pumpe 104, sehr schnell erfolgen können, damit es im (nicht dargestellten) Getriebe zu keinen Verspannungszuständen kommt, weil zum Beispiel zwei Gänge gleichzeitig geschaltet sind. Dies würde eine Fahrzeugsicherheit (zum Beispiel Spurstabilität, Fahrbarkeit, etc.) stark gefährden. Da bei einem Ausfall von zum Beispiel einer elektrischen Versorgung der Pumpenantrieb 106 nicht mehr aus eigener Kraft das Hydraulikfluid aus dem Zylinder 124 des Kupplungsaktuators 102 pumpen kann, muss der federdruckbelastete Kolben 122 des Kupplungsaktuators 102 das Hydraulikfluid herausdrücken. Mit Hilfe dieser Federkraft und dem dadurch aufgebauten Hydraulikdruck werden die Pumpe 104 und der Motor 106 zurückgedreht. Alternativ muss das Hydraulikfluid durch eine innere Leckage der Pumpe 104 zum Tank 112 zurückfließen können. Bei niedrigen Temperaturen von zum Beispiel ca. -10 °C, bei denen die Hydraulikflüssigkeit (in der Regel Öl) noch eine sehr hohe Viskosität aufweist, beschleunigt der zusätzliche Ablass über den Ablassanschluss 32 den Druckabbau.

Dies bedeutet mit anderen Worten, dass eine Strömungsenergie des strömenden Hydraulikfluids genutzt wird, um das Ventil 10 selbsttätig zu schalten. Abhängig von der Strömungsrichtung wird das Ventil 10 in Richtung des Tanks 112 geöffnet oder geschlossen. Dabei ist gewährleistet, dass das Gesamtsystem während eines Druckaufbaus dicht ist. Zusätzlich kann eine Entlüftungsblende entfallen, da der Kolben 122 mittels des Ventils über zyklisches Aktuieren entlüftet werden kann. Trotzdem verfügt das Ventil 10 über keine kostenintensive elektrische Ansteuerung. Das Ventil 10 selbst ist aus wenigen, vergleichsweise einfachen, Komponenten aufgebaut und deshalb kostengünstig zu realisieren.

In der oben stehenden Beschreibung wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

## Patentansprüche

1. Passives Druckabbauventil (10) für eine hydraulisch betätigte Kupplungsaktuatoranordnung (100) eines Kraftfahrzeuggetriebes, wobei die Kupplungsaktuatoranordnung (100) einen Kupplungsaktuator (102) und eine mittels eines Motors (106) aktiv angetriebene Pumpe (104) aufweist, die durch einen Druckaufbau unmittelbar, ohne ein zwischengeschaltetes aktives Regelventil, auf den Kupplungsaktuator (102) zum Schließen einer Reibkupplung einwirkt, wobei das passive Druckabbauventil (10) an die Pumpe (104), den Kupplungsaktuator (102) und ein Reservoir (110) für ein Hydraulikfluid koppelbar ist, und wobei das Druckabbauventil (10) aufweist:
ein Gehäuse (12); und
einen Schieber (16);
wobei der Schieber (16) einen rohrförmigen, vorzugsweise zylindrischen, Schieberkörper (18) aufweist, der in Längsrichtung (20) eine erste Öffnung (50) mit einer ersten Durchflussfläche (54) und eine zweite Öffnung (52) mit einer zweiten Durchflussfläche (56) aufweist, wobei die erste Öffnung (50) und die zweite Öffnung (52) über einen Strömungskanal (48) innerhalb des Schieberkörpers (18) miteinander verbunden sind, wobei der Strömungskanal (48) zwischen der ersten Öffnung (50) und der zweiten Öffnung (52) einen Verjüngungsabschnitt (58) aufweist, der eine kleinere Durchflussfläche (64) als die erste Öffnung (50) und als die zweite Öffnung (52) aufweist; und
wobei das Gehäuse (12) aufweist:
einen Einlassanschluss (34) zur fluidischen Kopplung des Druckabbauventils (10) an die Pumpe (104);
einen Auslassanschluss (36) zur fluidischen Kopplung des Druckabbauventils (10) an den Kupplungsaktuator (102);
einen, vorzugsweise rohrförmigen, Gehäusekörper (14), der einen sich in Längsrichtung (20) des Gehäuses (12) erstreckenden Durchgangskanal (24) für das Hydraulikfluid aufweist, wobei der Durchgangskanal (24) ein erstes Ende (26), einen zylindrischen Ablassabschnitt (30) und ein gegenüberliegendes zweites Ende (28) aufweist, wobei der Einlassanschluss (34) das erste Ende (26) definiert, wobei der Auslassanschluss (36) das zweite Ende (28) definiert, wobei der Ablassabschnitt (30) zwischen dem ersten Ende (26) und dem zweiten Ende (28) des Durchgangskanals (24) angeordnet ist und den Schieber (16) derart passgenau aufnimmt, dass der Schieber (16) innerhalb des Auslassabschnitts (30) zwischen einer ersten Endstellung (44) und einer zweiten Endstellung (46) verschieblich (42) gelagert ist; und
einen Ablassanschluss (32) zur fluidischen Kopplung des Druckabbauventils (10) an das Hydraulikfluidreservoir (110), wobei der Ablassanschluss (32) über einen Verbindungskanal (33) fluidisch an den Ablassabschnitt (30) gekoppelt ist, wobei der Verbindungskanal (33) in der ersten Endstellung (44) des Schiebers (16) verschlossen und in der zweiten Endstellung (46) des Schiebers (16) offen ist.

2. Passives Druckabbauventil (10) nach Anspruch 1, wobei sich mindestens ein Verbindungskanal (33) quer zur Längsrichtung (20) an den Durchgangskanal (24) anschließt.

3. Passives Druckabbauventil (10) nach Anspruch 1 oder 2, wobei der Gehäusekörper (14) zylindrisch, quadratisch oder rechteckig ausgebildet ist.

4. Passives Druckabbauventil (10) nach einem der Ansprüche 1 bis 3, wobei der Durchgangskanal (24) zylindrisch ausgebildet ist, wobei der Ablassabschnitt (30) in der Längsrichtung (20) durch Sprengringe (74) begrenzt ist.

5. Passives Druckabbauventil (10) nach einem der Ansprüche 1 bis 4, wobei der Strömungskanal (48) eine Blende (60) mit einer Öffnung (62) in einer axialen Richtung (20') des Schiebers (16) aufweist.

6. Passives Druckabbauventil (10) nach einem der Ansprüche 1 bis 5, wobei ein Außendurchmesser des Schiebers (16) inklusive einem Passungspiel im Wesentlichen einem Innendurchmesser des Ablassabschnitts (30) entspricht.

7. Passives Druckabbauventil (10) nach einem der Ansprüche 1 bis 6, das ferner ein Federelement (68) aufweist, das den Schieber (16) in die erste Endstellung (44) oder in die zweite Endstellung (46) vorspannt.

8. Passives Druckabbauventil (10) nach einem der Ansprüche 1 bis 7, wobei ein Innendurchmesser des Schiebers (16) einem Durchmesser des Einlassanschlusses (34) und/oder des Auslassanschlusses (36) entspricht.

9. Passives Druckabbauventil (10) nach einem der Ansprüche 1 bis 8, das angepasst ist, den Schieber (16) allein durch Druckänderungen zwischen dem Einlassanschluss (34) und dem Auslassanschluss (36) zwischen der ersten und der zweiten Endstellung (44, 46) hin und her zu bewegen (42).

10. Kupplungsaktuatoranordnung (100) mit einem hydraulisch betriebenen Kupplungsaktuator (102), einer motorisch betrieben Pumpe (104), einem Reservoir (110) für ein Hydraulikfluid, Leitungen (116) und einem passiven Druckabbauventil (10) gemäß einem der Ansprüche 1 bis 9, wobei die Pumpe (102), das passive Druckabbauventil (10), das Reservoir (110) und der Kupplungsaktuator (102) über die Leitungen (116) miteinander verbunden sind.

11. Kupplungsaktuatoranordnung nach Anspruch 10, wobei der Ablassabschnitt (30) des Druckabbauventils (10) eine größere Durchflussfläche als die erste Öffnung (34) und als die zweite Öffnung (36) aufweist.
